# EUROPÄISCHE PATENTANMELDUNG

(11) **EP 4 345 330 A1**
(43) Veröffentlichungstag der Anmeldung: **03.04.2024**
(21) Anmeldenummer: 23198906.2
(22) Anmeldetag: 21.09.2023
(51) Int. Cl.: F16D 1/097

(54) **SPANNSATZ FÜR HOHLWELLE MIT RADIUS**

(30) Priorität: 23.09.2022 DE 202022105365 U; 22.12.2022 DE 202022107185 U; 16.03.2023 DE 202023101313 U
(71) Anmelder: Stüwe GmbH & Co. KG, 45527 Hattingen (DE)
(72) Erfinder: DIESLER, Marius, 45527 Hattingen (DE); ARYAN, Abtin, 44269 Dortmund (DE)
(74) Vertreter: Osterhoff, Utz

(57) **Zusammenfassung**

Die vorliegende Erfindung betrifft einen Spannsatz (1) zum Einsetzen in einen Hohlraum, insbesondere eine Hohlwelle (12) aufweisend zwei axial gegenüberliegende Spannringe (4) und einen radial außenliegenden Klemmring (2), wobei der Klemmring (2) zwei gegenläufig zueinander axial verlaufende Innenkonusflächen (7) aufweist und jeder Spannring (4) eine axial verlaufende Außenkonusfläche (8), dergestalt, dass bei axialem aufeinander Zubewegen der Spannringe (4), der Klemmring (2) radial nach außen gespannt wird und mit seiner Außenmantelfläche (3) gegen eine Innenmantelfläche (13) des Hohlraums gedrückt ist. An mindestens einer innenliegenden Stirnseite (9) eines Spannringes (4) ist eine reibwerterhöhende Oberfläche, insbesondere eine Beschichtung (24) ausgebildet und im eingebauten Zustand liegen die Stirnflächen (9) beider Spannringe (4) aneinander an.

## Beschreibung

Die vorliegende Erfindung betrifft einen Spannsatz zum Einsetzen in einen Hohlraum, insbesondere eine Hohlwelle gemäß den Merkmalen im Oberbegriff von Anspruch 1.

Aus dem Stand der Technik ist es bekannt zur Herstellung von Welle-Nabe-Verbindungen Spannsätze zu verwenden. Ein solcher Spannsatz weist zumindest einen Spannring und einen Klemmring auf, wobei Spannring und Klemmring zueinander gegenläufig angeordnete Konusflächen aufweisen, die durch axiales Festziehen miteinander verspannt werden, dergestalt, dass durch die axiale Verschiebung eine Klemmkraft in Radialrichtung erzeugt wird.

Um außenseitig auf eine Hohlwelle ein Zahnrad, eine Welle bzw. ein Lager aufzusetzen, ist es aus dem Stand der Technik bekannt, in die Hohlwelle selbst einen Spannsatz einzusetzen, welcher dann eine in Radialrichtung nach außen wirkende Klemmkraft auf die Hohlwelle ausübt, um somit wiederum die Hohlwelle in Radialrichtung mit dem auf die Hohlwelle aufgesetzten Teil zu koppeln. Mithin wird die Hohlwelle durch den Spannsatz radial nach außen gedrückt und übt somit eine Klemmkraft auf das Zahnrad, die Welle, das Lager bzw. ein sonstiges auf die Hohlwelle aufgesetztes Teil aus. Ein solcher Spannsatz ist beispielsweise aus der DE 722 5899 U1 oder auch der DE 283 2917 A1 bekannt.

Aufgabe der vorliegenden Erfindung ist es, einen aus dem Stand der Technik bekannten Spannsatz in seiner Handhabung zu vereinfachen, in seiner Belastbarkeit und auch in der aufzubringenden radialen Klemmkraft zu erhöhen.

Die zuvor genannte Aufgabe wird erfindungsgemäß mit einem Spannsatz gemäß den Merkmalen im Anspruch 1 gelöst.

Vorteilhafte Ausgestaltungsvarianten der vorliegenden Erfindung sind Gegenstand der abhängigen Ansprüche.

Der Spannsatz dient zum Einsetzen in einen Hohlraum, insbesondere den Hohlraum einer Hohlwelle. Der Spannsatz weist zwei axial gegenüberliegende Spannringe auf. Die Spannringe sind bevorzugt innen hohl ausgebildet. Die Spannringe können jedoch auch selbst massiv ausgebildet sein, mithin wären es dann Spannscheiben. Diese sind, auf die Radialrichtung außen bezogen, umgeben von einem außenliegenden Klemmring. Der Klemmring hat insbesondere in Axialrichtung eine Breite, die der Breite der zwei Spannringe im Wesentlichen entspricht.

Der Klemmring selbst weist zwei gegenläufig zueinander verlaufende Innenkonusflächen auf. Jeder Spannring weist eine axial verlaufende Außenkonusfläche auf, die komplementär zu den Innenkonusflächen des Klemmrings ist, dergestalt, dass bei axialem Aufeinanderzubewegen der Spannringe der Klemmring radial nach außen gespannt wird und mit seiner Außenmantelfläche gegen eine Innenmantelfläche des Hohlraums bzw. der Hohlwelle gedrückt bzw. gespannt ist. Hierdurch wird in Radialrichtung eine Klemmkraft auf die Hohlwelle aufgebracht. Insbesondere wird die Hohlwelle selbst dazu in Radialrichtung gespannt, so dass ein auf die Hohlwelle gestecktes Teil, beispielsweise ein Zahnrad, wiederum eine Welle oder auch ein Lager, auf der Hohlwelle verspannt wird. Die Außenmantelfläche der Hohlwelle drückt somit gegen die Innenwandfläche des Teils, sodass hier eine Flächenpressung erzeugt wird und eine Klemmkraft aufgebracht ist. Die vorliegende Erfindung betrifft somit auch eine Spannsatzanordnung.

Erfindungsgemäß zeichnet sich der Spannsatz durch folgenden Vorteil aus. Die beiden Spannringe sind im vollständig eingesetzten und verspannten Zustand auf Block gefahren. Dies bedeutet, dass die inneren Stirnseiten der Spannringe, also die Stirnseiten der Spannringe, welche aufeinander zu zeigen, aneinander anliegen insbesondere unter einem Anpressdruck. Hier ist eine reibwerterhöhte Oberfläche an zumindest einer Stirnseite ausgebildet. Diese kann in einfachster Ausgestaltung eine Oberflächenrauheit aufweisen, welche größer ist als die Oberflächenrauheit der außenliegenden Stirnseite und/oder der Innenmantelfläche des Spannringes. Im eingebauten Zustand wirkt die Hohlwelle mit einem Drehmoment auf den eingesetzten Spannsatz. Mithin verdreht sich der Spannsatz in sich. Durch die aneinander anliegenden Stirnseiten der Spannringe sowie die reibwerterhöhte Oberfläche mindestens eines Spannringes, wird eine Relativverschiebung beider Spannringe zueinander weitestgehend vermieden. Die reibwerterhöhte Oberfläche dringt zumindest teilweise in die Oberfläche der Stirnseite des anderen Spannringes ein. Die Spannringe sind somit miteinander verankert. Besonders bevorzugt ist eine Beschichtung auf die Stirnseite aufgebracht. Die Beschichtung kann beispielsweise eine Bronzebeschichtung und/oder eine Beschichtung mit eingelagerten Karbiden sein. Auch hierdurch wird der Reibwert erhöht bzw. die Oberflächenrauheit erhöht und bei aneinander Anliegen beider Stirnseiten beider Spannringe wird eine Relativbewegung in Radialrichtung weitestgehend vermieden, da die Stirnseiten sich verankern. Einem auf den Spannsatz wirkenden Drehmoment und/oder Biegemoment kann somit entgegengewirkt werden.

Ein weiterer eigenständiger Aspekt der Erfindung, der in Kombination mit einzelnen oder allen zuvor und nachfolgend genannten Merkmalen an einem Spannsatz ausgebildet sein kann sieht vor, dass Schrauben verwendet werden zum Anziehen des Spannsatzes, insbesondere zum Aufeinanderzubewegen der beiden Spannringe, die ein besseres Verformungsverhalten besitzen. Hierzu werden Schrauben mit einer Zugfestigkeit Rm von 1.000 bis 1.200 N/mm² bzw. insbesondere einer Güte 10.9 eingesetzt. Kommt es bei eingesetztem Spannsatz somit zu einer Relativverschiebung aufgrund eines Insichverformens des Spannsatzes bzw. eines Verformens des Spannsatzes aufgrund eines aufgebrachten Momentes, so entsteht an den Schrauben aufgrund des besseren Verformungsverhaltens kein Bruch oder ähnliches. Der Spannsatz ist somit in gewissem Maße in sich verbiegbar bzw. elastisch verformbar. Besonders bevorzugt sind die Freibohrungen an einem Spannring, in welchen die Schrauben den Spannring durchgreifen, mindestens 1 % bevorzugt mehr als 3 % und ganz besondere bevorzugt mehr als 5 %, in der Praxis jedoch nicht mehr als 20 %, größer als ein Außendurchmesser des Schaftes der Schraube selber. Auch durch diese Möglichkeit ist eine Verformung in gewissen Grenzen verbessert.

Ein weiterer eigenständiger Aspekt der Erfindung, der in Kombination mit einzelnen oder allen zuvor und nachfolgend genannten Merkmalen an einem Spannsatz ausgebildet sein kann, betrifft den Reibwert der Kegelflächen. Die Kegelflächen haben besonders bevorzugt einen Kegelwinkel von 2° bis 5°. Die Oberflächenrauheit Ra ist insbesondere von 2µm bis 3 µm insbesondere bei 2,5 µm angesetzt. Es wird insbesondere ein Öl verwendet, welches ein hochelastisches Hydrauliköl ist. Das Hydrauliköl weist weiterhin ein gutes Luftabscheidevermögen auf. In Verbindung mit den zuvor genannten Kegelwinkeln wird insbesondere ein selbsthemmender Sitz erreicht. Ist der Spannsatz somit, wie zuvor beschrieben, auf Block gefahren bzw. fest verspannt, so sind Spannring und Klemmring selbsthemmend gehalten bzw. miteinander verankert.

Ein weiterer eigenständiger Aspekt der Erfindung, der in Kombination mit einzelnen oder allen zuvor und nachfolgend genannten Merkmalen an einem Spannsatz ausgebildet sein kann, betrifft eine erfindungsgemäße Anordnung des Spannsatzes in einer Hohlwelle. Der Spannsatz wird zunächst mit einem Passungsspiel bereitgestellt. Das Passungsspiel beträgt bevorzugt zwischen 1 mm und 2 mm. Dies bedeutet, dass der Außendurchmesser des Klemmrings im ungespannten Zustand mindestens 1 mm bevorzugt bis zu 2 mm kleiner ist als der Innendurchmesser der Hohlwelle. Hierdurch kommt in der Praxis eine physische Aufweitung des Klemmringes in Radialrichtung nach außen von bevorzugt mehr als 0,5 mm insbesondere mehr als 1 mm zustande. Dies ist eine relativ starke Aufweitung des Klemmrings. Es ermöglicht, dass Material aus der Hohlwelle ausgespart werden kann. Dies spart Gewicht an der Hohlwelle selbst ein und erleichtert ein Einsetzen des Spannsatzes im ungespannten Zustand in die Hohlwelle. Gerade in Verbindung mit der nachfolgend beschriebenen Ausführungsform des Außenradius wird wie bereits erwähnt die Möglichkeit des Einsetzens des Spannsatzes in die Hohlwelle in der Handhabung erleichert.

Ein weiterer Teil der Erfindung, der in Kombination mit einzelnen oder allen zuvor und nachfolgend genannten Merkmalen an einem Spannsatz ausgebildet sein kann, der eigenständig oder in Kombination zu sehen ist, zeichnet sich dadurch aus, dass an mindestens einer Außenseite des Klemmrings vom Übergang der Außenmantelfläche zu einer Stirnfläche des Klemmrings ein Radius ausgebildet ist. Vorzugsweise ist an jeder Außenseite ein Radius ausgebildet. Der Radius kann auch als Übergangsradius bezeichnet werden und ist insbesondere als Außenradius ausgebildet.

Zunächst wird durch den vorhandenen Radius an der Außenseite bzw. Außenkante des Klemmringes ermöglicht, dass der gesamte Spannsatz in den Hohlraum bzw. die Hohlwelle, ohne Verkanten einfacher eingeführt werden kann.

Sodann ergeben sich zwei erfindungswesentliche Vorteile. Dadurch, dass ein Radius ausgebildet ist, ist die in Axialrichtung zur Verfügung stehende Außenmantelfläche des Klemmrings, welche gegen die Innenmantelfläche des Hohlraumes gedrückt bzw. geklemmt wird, maximiert. Mithin ist die effektiv zur Verfügung stehende Fläche um eine Flächenpressung zu übertragen durch den Radius größer, beispielsweise im Vergleich zu einer Fase. Die Flächenpressung sinkt dadurch, dass die zur Übertragung zur Verfügung stehende Fläche gesteigert ist, die Belastbarkeit ist somit bei dem erfindungsgemäßen Spannsatz gesteigert.

Die zu übertragende Klemmkraft ist somit mit dem erfindungsgemäßen Spannsatz gesteigert.

Ein zweiter wesentlicher technischer Vorteil ist, dass durch den Radius der Spannungsverlauf innerhalb des Klemmringes verbessert ist. Insbesondere eine Rissneigung, im Gegensatz zu einer 90° Kante bzw. auch zu einer Fase, ist deutlich gemindert. Die Belastbarkeit und auch die Dauerhaltbarkeit sind somit gesteigert.

Gleichzeitig ermöglicht der Radius ein einfacheres Einsetzen bzw. Einführen des Spannsatzes in den Hohlraum, weshalb die Handhabbarkeit erleichtert ist.

In einer bevorzugten Ausgestaltungsvariante vergrößert sich der Radius von der Außenmantelfläche zu der Stirnfläche hin. Durch diese Maßnahme wird die effektiv zur Verfügung stehende Außenmantelfläche, um eine Klemmkraft in Radialrichtung aufzubringen, nochmals maximiert, gleichzeitig durch den zur Stirnfläche hin vergrößernden Radius wird der Spannungsverlauf maximal optimiert.

Weiterhin besonders bevorzugt ist der Radius im Bereich der Außenmantelfläche über ein in Radialrichtung gemessenen Längenabschnitt um den Faktor kleiner 0,75, insbesondere kleiner 0,6, besonders bevorzugt kleiner gleich 0,5 ausgelegt als der Längsabschnitt.

Der Radius vergrößert sich dann zu dem Bereich der Stirnfläche hin. Insbesondere beträgt der Radius über den in Radialrichtung gemessenen Längenabschnitt dann einen Faktor größer 1,5, insbesondere größer 1,8, besonders bevorzugt größer gleich 2,0 in Relation zu dem Längenabschnitt.

Der Radius vergrößert sich bevorzugt von der Außenmantelfläche zu der Stirnfläche um den Faktor größer 2, insbesondere gößer 3, besonders bevorzugt größer gleich 4.

In einer weiteren bevorzugten Ausgestaltungsvariante sind die Konusflächen selbst nur geölt. Eine weitere Schmierung oder Fettung findet nicht statt. Hierdurch hat sich die Bedienbarkeit des erfindungsgemäßen Spannsatzes verbessert.

Weiterhin bevorzugt ist in zumindest einem Spannring mindestens eine Aufnahmebohrung für ein Anschlagmittel vorgesehen. Die Aufnahmebohrung ist separat von den Öffnungen bzw. Bohrungen der Axialschrauben bzw. Spannschrauben zu sehen. Hierdurch kann zunächst der Spannsatz vollständig vormontiert angeliefert werden. Gleichzeitig wird vermieden, dass eine Öffnung bzw. Bohrung einer Spannschraube zweckentfremdet wird, sodass stets die gleiche Qualität der aufzubringenden Spannkraft bereitgestellt ist.

In weiterer vorteilhafter Ausgestaltungsvariante ist an der Innenwandfläche der Spannringe und/oder an den Stirnseiten bzw. Stirnflächen der Spannringe eine Korrosionsschutzbeschichtung aufgebracht, insbesondere eine Korrosionsschutzlackierung, ebenfalls ist diese bevorzugt auf die Stirnflächen des Klemmringes aufgebracht. Im Bereich der äußeren Kante, in welcher der erfindungsgemäße Radius angeordnet ist, findet bei Aufbringung einer Klemmkraft auf den Spannsatz eine maximale Deformation statt. Durch den erfindungsgemäßen Radius sowie das Aufbringen der Lackierung, hier auch im Bereich des Radius, wird jedoch ebenfalls der Spannungsverlauf in der Korrosionsschutzbeschichtung verbessert, dergestalt, dass ein Reißen bzw. Abplatzen der Korrosionsschutzbeschichtung in diesem Bereich vermieden ist.

Weitere Vorteile, Merkmale, einschlägige Aspekte der vorliegenden Erfindung sind Gegenstand der nachfolgenden Beschreibung. Bevorzugte Ausgestaltungsvarianten werden in schematischen Figuren dargestellt. Diese dienen dem einfacheren Verständnis der Erfindung. Es zeigen
- Figur 1: einen erfindungsgemäßen Spannsatz in perspektivischer Ansicht,
- Figur 2: einen Spannsatz in Stirnansicht,
- Figur 3: eine Querschnittsansicht gemäß der Schnittlinie A-A aus Figur 2,
- Figur 4: eine Querschnittsansicht gemäß der Schnittlinie B-B aus Figur 2,
- Figur 5: eine Querschnittsansicht gemäß der Schnittlinie C-C aus Figur 2,
- Figur 6: eine Spannsatzanordnung,
- Figur 7a, b, c: den Vergleich eines erfindungsgemäßen Spannsatzes in Relation zu einem Spannsatz mit Fase bzw. ohne Fase gemäß dem Stand der Technik.

In den Figuren werden für gleiche oder ähnliche Bauteile dieselben Bezugszeichen verwendet, auch wenn eine wiederholte Beschreibung aus Vereinfachungsgründen entfällt.

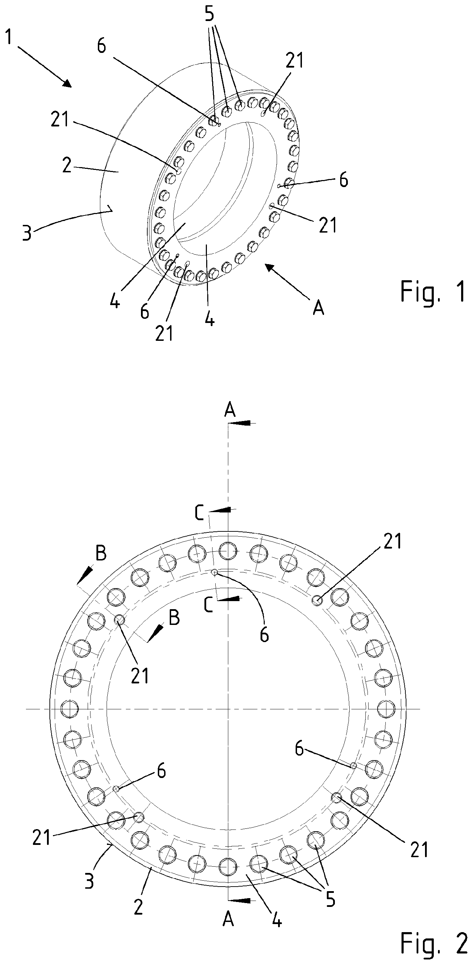

Figur 1 zeigt einen erfindungsgemäßen Spannsatz 1. Dieser weist einen außen umlaufenden Klemmring 2 auf. Der Klemmring 2 hat hierzu eine Außenmantelfläche 3. In den Klemmring 2 eingesetzt sind zwei Spannringe 4. Radial umlaufend verteilt sind Spannschrauben 5, die zwei Spannringe 4 miteinander verbindend, angeordnet. Die Spannschrauben 5 sind dazu in Axialrichtung A orientiert verlaufend.

Ferner sind in einem Spannring mehrere Aufnahmebohrungen 6 angeordnet. Diese Aufnahmebohrungen 6 sind separat von den Spannschrauben 5 angeordnet. Hier können nicht näher dargestellte Spannmittel, beispielsweise ein Anschlagpunkt oder auch ein Lagerauge eingeschraubt werden, so dass der so bereitgestellte Spannsatz beispielsweise mit einem Hebemittel, angehoben werden kann.

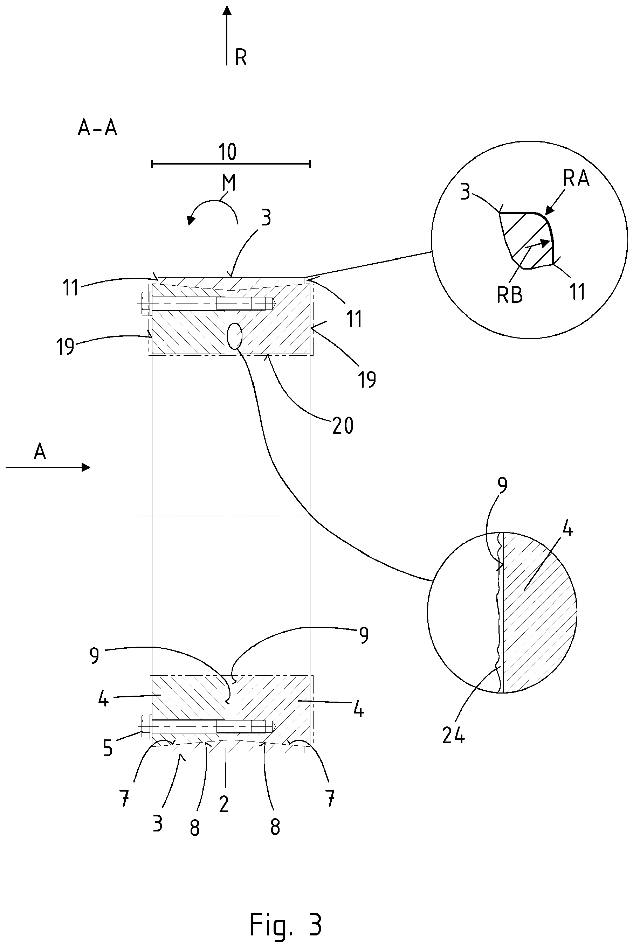

Figur 3 zeigt eine Querschnittsansicht gemäß der Schnittlinie A-A aus Figur 2. Der Klemmring 2 weist zwei gegenläufig zueinander angeordnete Konusflächen 7 auf. Die Konusflächen 7 der Klemmringe 2 sind wiederum komplementär ausgebildet zu Konusflächen 8 der Spannringe 4. Durch axiales Verschieben, mithin durch Festziehen der Spannschrauben 5, werden die Spannringe 4 aufeinander zubewegt, so dass sie mit ihren innenseitigen Stirnseiten 9 im vollständig montierten Zustand vorzugsweise aneinander anliegen. Die Breite 10 in Axialrichtung A des Klemmringes 2 entspricht dann bevorzugt der Breite 10 der zwei Spannringe 4. In diesem Zustand bringt dann der Klemmring 2 in Radialrichtung R nach außen eine Klemmkraft auf bzw. wird der Klemmring 2 in Radialrichtung R nach außen verformt, insbesondere elastisch verformt und drückt dann gegen eine nicht näher dargestellte Hohlwelle.

Erfindungsgemäß zeigt die Vergrößerung in Figur 3 nunmehr, dass im Übergang zu Außenmantelfläche 3 des Klemmrings 2 zu einer Stirnfläche 11 des Klemmrings 2 erfindungsgemäß ein Radius RA, RB ausgebildet ist. Der Radius RA, RB ist im Bereich der Außenmantelfläche 3 kleiner ausgebildet und vergrößert sich dann zur Stirnfläche 11 hin. Hierdurch vergrößert sich effektiv die zur Verfügung stehende Außenmantelfläche 3 zum Aufbringen einer Klemmkraft. Ferner wird der im Klemmring 2 vorhandene Spannungsverlauf durch den Radius RA, RB optimiert. Insbesondere dadurch, dass der Radius sich zur Stirnfläche hin vergrößert. Hier ist dargestellt ein Radius von RA und RB, bevorzugt angegeben in mm, RA = 0,5 und RB = 2.

Bevorzugt ist an der Innenmantelfläche 20 sowie an den innenliegenden 9 und außenliegenden 19 Stirnseiten zu den Spannringen 4 eine Korrosionsschutzbeschichtung aufgebracht, sowie an den Stirnflächen 11 des Klemmrings 2. Gerade im Bereich des Radius RA, RB ist somit im Bereich der Außenkante ein Abplatzen oder Aufreißen einer Korrosionsschutzbeschichtung am Klemmring 2 vermieden.

Ein weiterer Aspekt der Erfindung ist in der auf die Bildebene bezogen unten rechts dargestellten Vergrößerung gezeigt. Die Stirnseite 9 des rechten Spannrings 4 weist eine reibwerterhöhte Oberfläche auf, insbesondere eine Beschichtung 24. Die Oberfläche der Stirnseite 9 weist beispielsweise einen größeren Reibwert und/oder größere Oberflächenrauheit auf, in Relation zu der außenliegenden Stirnseite 19 und/oder der Innenmantelfläche 20 des Spannringes. Wird nunmehr der Spannsatz in eine Hohlwelle eingesetzt und vollständig angezogen, liegen beide Stirnseiten 9 der gegenüberliegenden Spannringe 4 aneinander an, insbesondere unter einem Anpressdruck aneinander an. Die reibwerterhöhte Oberfläche bzw. Beschichtung 24 drückt sich somit in die Stirnseite 9 des anderen Spannringes 4 ein. Das dargestellte wirkende Moment M führt somit nicht zu einem Insichverdrehen des Spannsatzes, da eine Relativbewegung in Radialrichtung R weitestgehend vermieden wird.

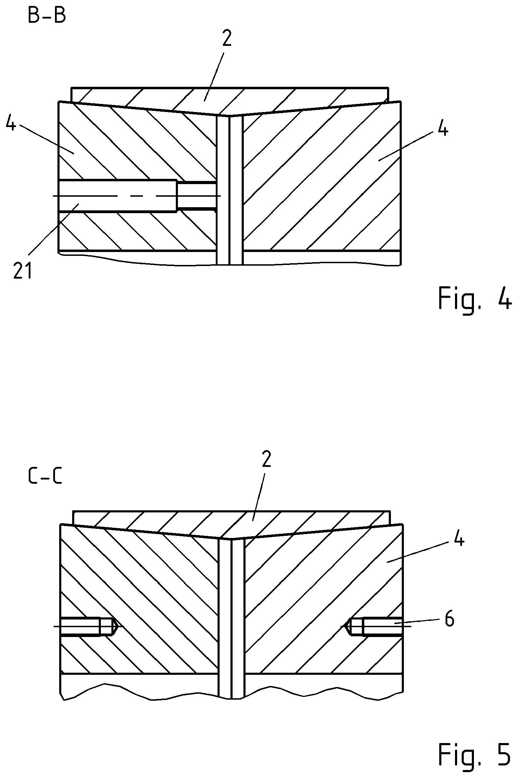

Figuren 4 und 5 zeigen jeweilige Schnittansichten gemäß der Schnittlinie B-B und Schnittlinie C-C aus Figur 2. Gemäß Figur 4 ist eine in Axialrichtung A gerichtete Durchgangsbohrung mit Innengewinde 21 angeordnet. Diese Durchgangsbohrungen dienen dem Lösen des Spannsatzes. Liegen die beiden Spannringe 4 aneinander an, kann in die Durchgangsbohrung mit Innengewinde 21 eine Schraube eingesteckt werden und festgezogen werden, so dass die durch weiteres Einschrauben der Schraube und axiales Durchgreifen des auf die Bildebene bezogenen linken Spannringes 4, die Schraube den auf die Bildebene bezogenen rechten Spannring 4 wegdrückt.

In Figur 5 sind die Aufnahmebohrungen 6 für nicht näher dargestellte Anschlagmittel gezeigt. Hier können beispielsweise eine Öse oder Ähnliches eingeschraubt werden, um dann mit einem Hebezeug den Spannsatz 1 anzuheben.

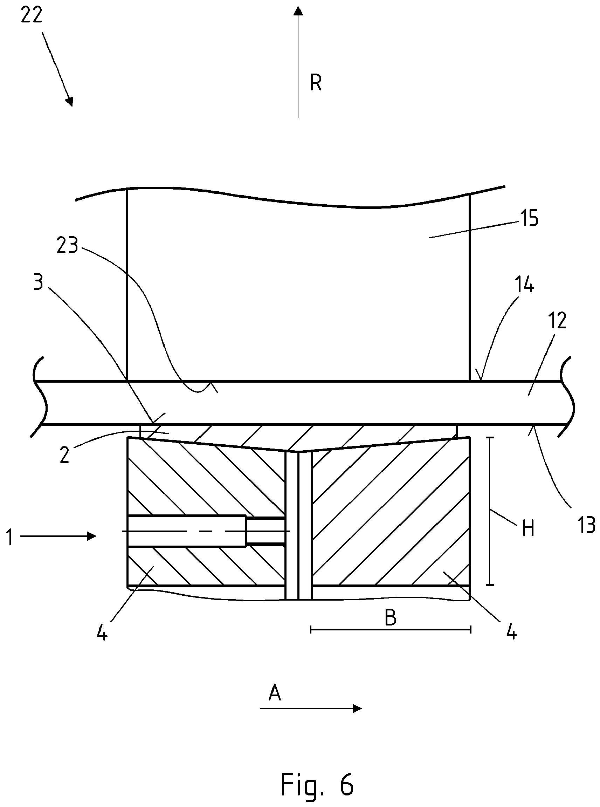

Figur 6 zeigt eine erfindungsgemäße Spannsatzanordnung 22. Hierbei ist der Spannsatz in eine Hohlwelle 12 eingesetzt. Auf die Radialrichtung nach außen bezogen, übt der Spannsatz somit eine Druckkraft bzw. Spannkraft gegen die Innenmantelfläche 13 der Hohlwelle 12 aus. Die Hohlwelle 12 wird wiederum mit ihrer Außenmantelfläche 14 dann gegen eine Innenmantelfläche 23 eines mit der Hohlwelle 12 zu verbindenden Teils 15, beispielsweise Zahnrad, Lager oder eine Welle gedrückt, sodass eine Klemmkraft gegen axiales Verschieben sowie zur Übertragung eines Drehmomentes bereitgestellt ist. Die Höhe H eines Spannrings 4 entspricht mindestens 80 % bevorzugt größer 90 % der Breite B.

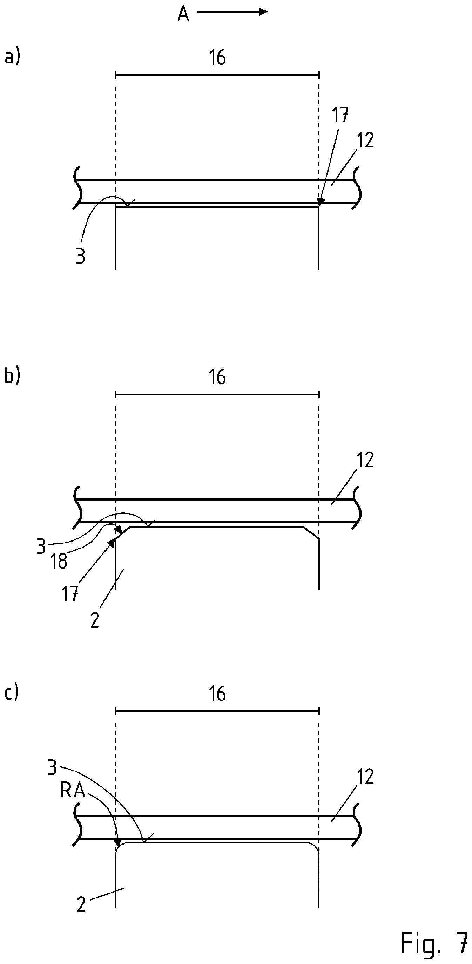

Figur 7a, b und c zeigen im Falle von Figur 7c die erfindungsgemäße Ausgestaltung mit einem Radius. Die sich in Axialrichtung A erstreckende effektiv zur Verfügung stehende Fläche 16 zur Übertragung einer Klemmkraft ist im Rahmen der gestrichelten Linie dargestellt. Gemäß Figur 7a ist diese maximal groß, da ein rechter Winkel vorhanden ist. Hier ist jedoch im Bereich einer Kante 17 die Gefahr einer Rissbildung gegeben bzw. kann insbesondere ein Einführen in Hohlwelle 12 bereits zu einem Verkanten führen.

Gemäß Figur 7b ist eine Fase 18 angeordnet. Die Fase 18 verkleinert jedoch im Vergleich zum Radius dargestellten Figur 7c die effektiv zur Verfügung stehende Fläche 16. Ferner ist auch im Bereich der Fase 18 jeweils eine Kante 17 vorhanden, sodass es auch hier zu einer Rissbildung kommen kann, weshalb gerade bei Figur 7b die Fläche 16 gegenüber dem erfindungsgemäßen Radius verkleinert ist, gleichzeitig der Spannungsverlauf ebenfalls nicht optimal ausgebildet ist.

Der in Figur 7 dargestellte Radius, hier gekennzeichnet mit RA nur beispielhaft, zeigt jedoch, dass keine Kante vorhanden ist. Ferner ist die zur Verfügung stehende Fläche 16 deutlich größer als bei einer Fase gemäß Figur 7b dargestellt. Der nicht näher dargestellte Spannungsverlauf verläuft gekrümmt unterhalb des Radius RA innerhalb des Werkstoffs des Klemmrings 2, so dass der Bereich der äußeren Kante nicht zu einer Rissbildung oder Rissneigung führt.

### Bezugszeichen:

- 1 -: Spannsatz
- 2 -: Klemmring
- 3 -: Außenmantelfläche zu 2
- 4 -: Spannring
- 5 -: Spannschraube
- 6 -: Aufnahmebohrung
- 7 -: Konusfläche zu 2
- 8 -: Konusfläche zu 4
- 9 -: innenseitige Stirnseite zu 4
- 10 -: Breite zu 2
- 11 -: außenliegende Stirnfläche zu 2
- 12 -: Hohlwelle
- 13 -: Innenwandfläche zu 12
- 14 -: Außenmantelfläche zu 12
- 15 -: Teil
- 16 -: Fläche
- 17 -: Kante
- 18 -: Fase
- 19 -: außenliegende Stirnseite zu 4
- 20 -: Innenmantelfläche zu 4
- 21 -: Durchgangsbohrung mit Innengewinde
- 22 -: Spannsatzanordnung
- 23 -: Innenmantelfläche zu 15
- 24 -: Beschichtung
- A -: Axialrichtung
- R -: Radialrichtung
- RA -: Radius
- RB -: Radius
- B -: Breite
- H -: Höhe
- M -: Moment

## Patentansprüche

1. Spannsatz (1) zum Einsetzen in einen Hohlraum, insbesondere eine Hohlwelle (12) aufweisend zwei axial gegenüberliegende Spannringe (4) und einen radial außenliegenden Klemmring (2), wobei der Klemmring (2) zwei gegenläufig zueinander axial verlaufende Innenkonusflächen (7) aufweist und jeder Spannring (4) eine axial verlaufende Außenkonusfläche (8), dergestalt, dass bei axialem aufeinander Zubewegen der Spannringe (4), der Klemmring (2) radial nach außen gespannt wird und mit seiner Außenmantelfläche (3) gegen eine Innenmantelfläche (13) des Hohlraums gedrückt ist, **dadurch gekennzeichnet, dass** an mindestens einer innenliegenden Stirnseite (9) eines Spannringes (4) eine reibwerterhöhende Oberfläche, insbesondere eine Beschichtung (24) ausgebildet ist und im eingebauten Zustand die Stirnflächen (9) beider Spannringe (4) aneinander anliegen.

2. Spannsatz (1) nach Anspruch 1, **dadurch gekennzeichnet, dass** an der Außenseite des Klemmrings (2) vom Übergang der Außenmantelfläche (3) zu einer Stirnfläche (11) ein Radius (RA, RB) ausgebildet ist, vorzugsweise ist an jeder Außenseite ein Radius (RA, RB) ausgebildet.

3. Spannsatz (1) nach Anspruch 2, **dadurch gekennzeichnet, dass** der Radius (RA, RB) sich von der Außenmantelfläche (3) zu der Stirnseite (11) vergrößert.

4. Spannsatz (1) nach einem der vorhergehenden Ansprüche, **dadurch gekennzeichnet, dass** der Radius (RA) im Bereich der Außenmantelfläche (3) über einen in Radialrichtung (R) gemessenen Längenabschnitt um den Faktor kleiner 0,75, insbesondere kleiner 0,6, besonders bevorzugt kleiner gleich 0,5 ausgelegt ist.

5. Spannsatz (1) nach einem der vorhergehenden Ansprüche, **dadurch gekennzeichnet, dass** der Radius (RB) im Bereich der Stirnfläche (11) über einen in Radialrichtung (R) gemessenen Längenabschnitt um den Faktor größer 1,5, insbesondere größer 1,8, besonders bevorzugt größer gleich 2,0 ausgelegt ist.

6. Spannsatz (1) nach einem der vorhergehenden Ansprüche, **dadurch gekennzeichnet, dass** die Konusflächen (7, 8) nur geölt sind.

7. Spannsatz (1) nach einem der vorhergehenden Ansprüche, **dadurch gekennzeichnet, dass** in zumindest einem Spannring (4) mindestens eine Aufnahmebohrung (6) für ein Anschlagmittel vorgesehen ist.

8. Spannsatz (1) nach einem der vorhergehenden Ansprüche, **dadurch gekennzeichnet, dass** ein Spannring (4) eine Breite (B) in Axialrichtung aufweist, die mindestens 90% der Höhe (H) des Querschnitts in Radialrichtung (R) entspricht.

9. Spannsatz (1) nach einem der vorhergehenden Ansprüche, **dadurch gekennzeichnet, dass** im angezogenen Zustand die Spannringe (4) mit ihren inneren Stirnseiten (9) aneinander anliegen.

10. Spannsatz (1) nach einem der vorhergehenden Ansprüche, **dadurch gekennzeichnet, dass** die Spannringe (4) innen hohl ausgebildet sind.

11. Spannsatz (1) nach einem der vorhergehenden Ansprüche, **dadurch gekennzeichnet, dass** die beiden Spannringe (4) durch radial umlaufend angeordnete in Axialrichtung orientierte Spannschrauben miteinander gekoppelt sind.

12. Spannsatz (1) nach einem der vorhergehenden Ansprüche, **dadurch gekennzeichnet, dass** die Spannringe (4) an Ihrer Innenmantelfläche und/oder Ihren Stirnseiten eine Korrosionsschutzbeschichtung aufweisen, insbesondere eine Lackierung.
